# EUROPÄISCHE PATENTSCHRIFT

(11) **EP 2 562 576 B1**
(45) Veröffentlichungstag und Bekanntmachung des Hinweises auf die Patenterteilung: **19.09.2018**
(21) Anmeldenummer: 12005277.4
(22) Anmeldetag: 18.07.2012
(51) Int. Cl.: G02B 6/44

(54) **Glasfaser-Netzverteiler**
Optical fiber distributor
Distributeur pour fibres optiques

(30) Priorität: 26.08.2011 DE 102011111288
(43) Veröffentlichungstag der Anmeldung: 27.02.2013
(73) Patentinhaber: Langmatz GmbH, 82467 Garmisch-Partenkirchen (DE)
(72) Erfinder: Schuster, Axel, 82467 Garmisch-Partenkirchen (DE); Bruweleit, Stefan, 82377 Penzberg (DE)
(74) Vertreter: Flosdorff, Jürgen

(56) Entgegenhaltungen:
- DE-A1- 2 306 969
- DE-U1-202009 007 626
- GB-A- 1 432 566
- US-A1- 2004 149 486
- US-A1- 2007 190 815
- US-A1- 2010 284 661

## Beschreibung

Die Erfindung betrifft einen Glasfaser-Netzverteiler mit einem Gehäuse, in dem ein Aufnahmegerüst angeordnet ist, das mit als Befestigungsmittel für Kunststoffröhrchen dienenden Clipsen versehen ist.

In derartige Glasfaser-Netzverteiler werden Hauptglasfaserkabel eingeführt, die eine Vielzahl von Glasfaserkabeln (auch Einzelader genannt) enthalten, die wiederum eine größere Anzahl von Glasfasern aufnehmen. Die Einzeladern des Glasfaserkabels werden in dem Glasfaser-Netzverteilerschrank vorsortiert und dem Einzeladermanagement zugeführt. Die Glasfasern der Einzelader werden an kleinere Glasfaserkabel gespleißt oder gekoppelt, die dann zu den Kunden geführt werden. Da diese Glasfaserkabel mechanisch sehr empfindlich sind, geschieht dies üblicherweise in kleinen Kunststoffröhrchen, auch "Speed-Pipes" genannt. Um mit einem Glasfaser-Netzverteiler eine große Anzahl an Kunden versorgen zu können, bedingt dies somit eine große Anzahl an Kunststoffröhrchen, die im Glasfaser-Netzverteiler gemanagt werden müssen.

Es ist bekannt, die Kunststoffröhrchen mit Schraubschellen an dem Aufnahmegerüst zu befestigen. Dazu müssen auf engem Raum die Kunststoffröhrchen jeweils durch die zugehörige Schraubschelle hindurchgeführt werden, woraufhin die Schraubschellen mittels eines Schraubendrehers festge-zogen werden. Diese Arbeit ist umständlich und zeitaufwändig.

Aus der US 2010/0284661 A1 ist eine Spleiß-Schale bekannt, bei der an deren Bodenwand ein Aufnahmegerüst angeordnet ist, an dem Clipse befestigt sind, die als Befestigungsmittel für Kunststoffröhrchen dienen. Das Aufnahmegerüst besteht aus zwei in Tiefenrichtung des Gehäuses hintereinander angeordneten Blechen, die Aussparungen haben, in die die Clipse eingerastet sind. Jeder Clips hat mehrere nebeneinander angeordnete Einbuchtungen, in die jeweils zwei Kunststoffröhrchen lose eingesetzt werden, die durch in die Einbuchtungen vorstehende Vorsprünge dagegen gesichert sind, unbeabsichtigt aus den Einbuchtungen herauszufallen. Die Bleche mit den Clipsen sind schwenkbar angeordnet.

Die DE 20 2009 007 626 U1 offenbart einen Kabelkanal, in dem Kabelbefestigungsvorrichtungen angeordnet sind, die eine Vielzahl von nebeneinander ausgebildeten Kabelaufnahmen mit einem kreissegmentförmigen Aufnahmequerschnitt haben, in den jeweils ein Kabel seitlich eingedrückt wird.

Die GB 1 432 566 A offenbart lösbare Clipse, die in Nuten am Boden eines Kunststoffkanals eingerastet sind, um Heizrohre 10 zu halten, die seitlich in die Clipse eingedrückt werden.

Die DE 23 06 969 A offenbart eine Klemmvorrichtung zur Befestigung lang gestreckter rohrförmiger Körper, die aus mehreren nebeneinander angeordneten U-förmigen Klemmschenkeln besteht, in die die Rohre seitlich eingedrückt werden.

Die US2007/0190815 A1 offenbart einen Glasfaser-Netzverteiler mit einem Kabelmanagement-Gerüst, das einen Rahmen mit zwei vertikalen Schienen enthält, an denen eine Vielzahl von Patch-Paneelen befestigt ist. Diese Patch-Paneele enthalten nebeneinander eine Vielzahl von Aufnahmen, in die Stecker von Kabeln eingesteckt werden. Vor den Patch-Paneelen ist eine Kabelmanagement-Stange befestigt, auf der nebeneinander eine Vielzahl von Hülsen angeordnet sind, durch die jeweils ein Kabel geführt wird. Damit stützt und hält die Kabelmanagement-Stange die Kabel an einer Zwischenposition zwischen einer Kabelbündelführung seitlich neben den Patch-Paneelen und den Steckplätzen. Die Kabelmanagement-Stange kann eine begrenzte Flexibilität haben und in beliebige Formen gebogen werden.

Die US 2004/149486 A1 offenbart einen Glasfaser-Netzverteiler mit einem Gehäuse, in dem ein Aufnahmegerüst angeordnet ist, das mit als Befestigungsmittel für Kunststoffröhrchen dienenden Clipsen versehen ist, die jeweils einen klauenartigen Klemmabschnitt haben, in den Kunststoffröhrchen seitlich eindrückbar sind, wobei das Aufnahmegerüst ein Trägerelement aufweist, das mehrere treppenartig versetzte Clipse aufweist, die übereinander angeordnet sind und Fenster aufweisen, in die Clipse eingerastet sind, wobei das Trägerelement aus Metallblech besteht und mit einem rechtwinklig abgebogenen Steg versehen ist, der an einer Rückwand des Gehäuses des Glasfaser-Netzverteilers angeschraubt ist.

Der vorliegenden Erfindung liegt die Aufgabe zugrunde, eine bessere Lösung für die Befestigung von Kunststoffröhrchen an einem Aufnahmegerüst anzugeben.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass als Befestigungsmittel Clipse verwendet werden, die jeweils einen klauenartigen Klemmabschnitt haben, in den ein Kunststoffröhrchen bzw. eine Speed-Pipe seitlich eindrückbar ist. Dabei entfällt das umständliche Durchziehen der Speed-Pipes durch die Schraubschellen nach dem Stand der Technik und es ist kein Werkzeug erforderlich, um die Speed-Pipes zu befestigen. Sie sind damit schnell und einfach zu montieren bzw. abzulegen.

Außerdem ist vorgesehen, dass die Clipse lösbar an dem Aufnahmegerüst befestigt sind, wobei sie mit diesem verrastet sind. Damit ist auch das Anbringen der Clipse an dem Aufnahmegerüst schnell und einfach durchzuführen.

Das Aufnahmegerüst besteht aus einer Vielzahl von nebeneinander angeordneten Trägerelementen, die aus einem Metallblech geschnitten und geformt sind. Jedes Trägerelement weist mehrere treppenartig versetzte Vorsprünge, die übereinander angeordnet sind, auf, mit denen die Clipse verrastbar sind. Die Vorsprünge der Trägerelemente haben im wesentlichen eine Rechteckform, aus der ein im wesentlichen rechteckiges Fenster ausgeschnitten ist. In dieses Fenster rastet der Clip auf die weiter unten beschriebene Weise ein.

Weiter sieht die Erfindung vor, dass jeder Clip eine Aufnahmetasche aufweist, die auf einen Vorsprung eines Trägerelements aufschiebbar ist, und die einen Federarm mit einer Rastnase aufweist, die im aufgeschobenen Zustand auf den Vorsprung in das Fenster einrastet. Da der Vorsprung ein flaches Blech ist, ist die Aufnahmetasche entsprechend flach ausgebildet.

Die Clipse sind nach einem weiteren Vorschlag aus einem thermoplastischen Kunststoff hergestellt, der die erforderliche Elastizität hat.

Erfindungsgemäß ist ferner vorgesehen, dass die Aufnahmetasche des Clips an der Eintrittsöffnung eine geradlinige Basiswand hat, die an beiden seitlichen Rändern insgesamt U-förmig zurück gebogen ist, und dass im Abstand von der Einstrittsöffnung aus der Basiswand der Federarm frei geschnitten ist. Die beiden U-förmigen Randabschnitte haben eine Rückwand als Anschlag für einen Vorsprung des Trägerelements.

Weiter ist vorgesehen, dass die Aufnahmetasche im Bereich der beiden Rückwände durch Stege mit dem klauenartigen Klemmabschnitt verbunden ist. Der so ausgebildete Clip ist einstückig im Spritzgussverfahren herstellbar.

Der klauenartige Klemmabschnitt, in dem ein Kunststoffröhrchen festklemmbar ist, hat vorzugsweise querschnittlich eine Kreisbogenform, die sich geringfügig über 180° hinaus erstreckt. Beim seitlichen Eindrücken eines Kunststoffröhrchens werden die beiden Klauenarme federnd auseinander gedrückt und klemmen das Kunststoffröhrchen fest.

Zur Befestigung von Kunststoffröhrchen mit unterschiedlichen Durchmessern sind Clipse vorgesehen, deren kreisbogenförmige Klemmöffnung auf die jeweiligen Kunststoffröhrchen abgestimmte Durchmesser haben.

Weitere Einzelheiten der Erfindung ergeben sich aus der nachfolgenden Beschreibung einer bevorzugten Ausführungsform eines Trägerelementes und eines zugehörigen Clips. Dabei zeigen:
- Figur 1: ein Trägerelement,

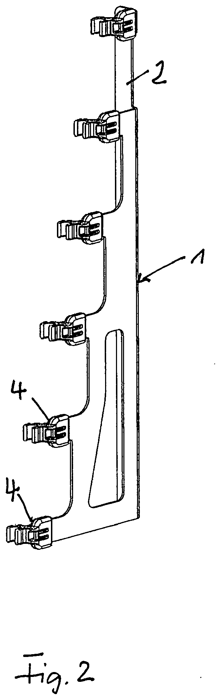

- Figur 2: das Trägerelement gemäß Figur 1 mit befestigten Clipsen,

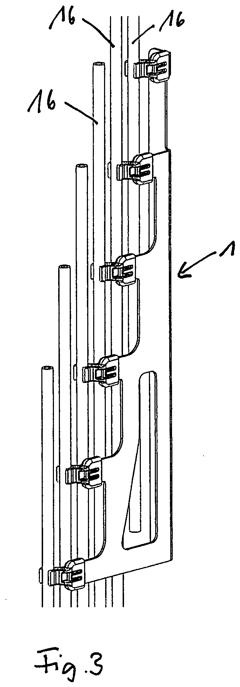

- Figur 3: das Trägerelement gemäß Figur 2 mit Kunststoffröhrchen,
- Figur 4: eine schräge Aufsicht auf einen Clip;

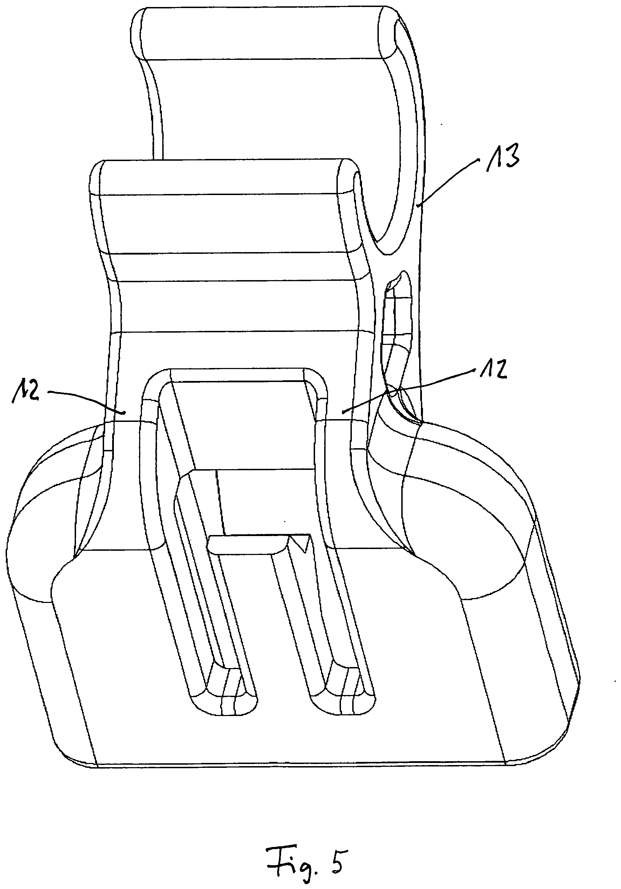

- Figur 5: eine Unteransicht des Clips und
- Figur 6: eine Seitenansicht des Clips.

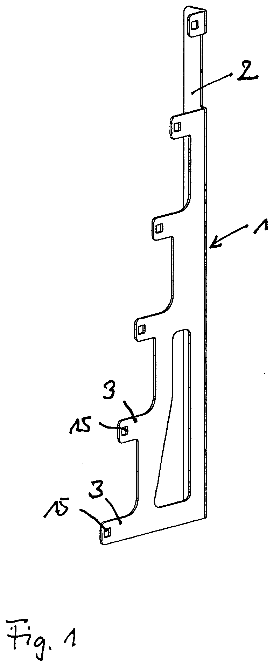

Figur 1 zeigt ein aus Metallblech hergestelltes Trägerelement 1, das an der Rückseite mit einem rechtwinklig abgebogenen Steg 2 versehen ist, der an einer Rückwand des Gehäuses eines nicht dargestellten Glasfaser-Netzverteilers anschraubbar ist. Eine größere Anzahl dieser Trägerelemente, beispielsweise zwölf an der Zahl, sind dicht nebeneinander in vertikaler Ausrichtung angeordnet.

Das Trägerelement 1 hat übereinander, nach oben hin treppenförmig zurück versetzt, mehrere rechteckige Vorsprünge 3, auf die jeweils ein Clip 4 aufgeschnappt wird. In jedem Vorsprung 3 ist ein im wesentlichen rechteckiges Fenster 15 ausgebildet. Jeder Clip hat eine schmale Eintrittsöffnung 5, in die - relativ betrachtet - ein Vorsprung 3 eintritt.

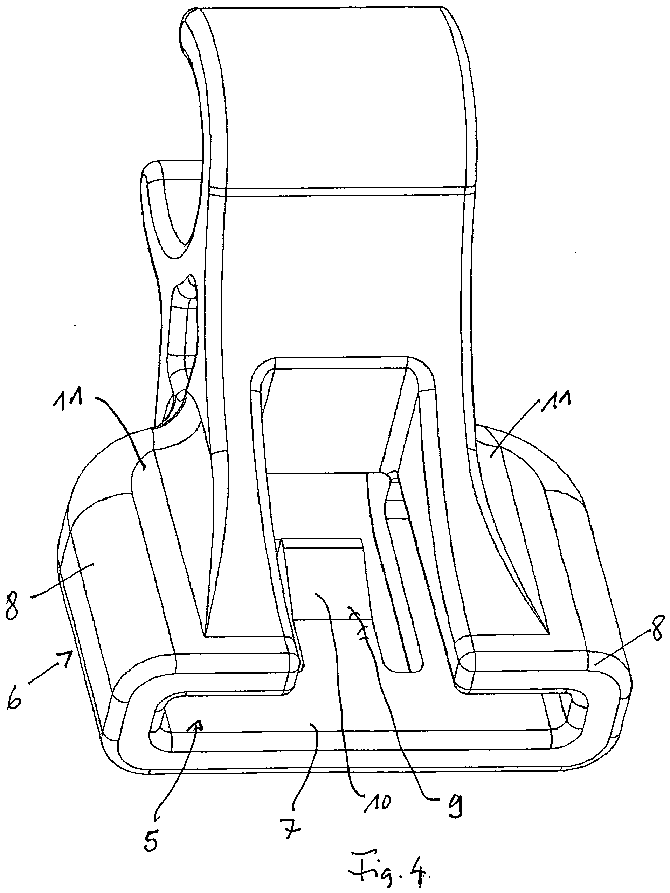

Der Clip 4 hat an der Eintrittsöffnung 5 seiner Aufnahmetasche 6 eine (in der Darstellung der Figur 4) untere geradlinige Basiswand 7, die an beiden seitlichen Rändern insgesamt U-förmig zurück gebogen ist, so dass U-förmige Randabschnitte 8 ausgebildet sind. Aus der Basiswand 7 ist eine sich in Einschubrichtung erstreckende Federzunge 9 frei geschnitten, die eine rampenförmig ansteigende Rastnase 10 hat.

Die beiden U-förmigen Randabschnitte 8 haben eine geschlossene Rückwand, die als Anschlag für den Vorsprung 3 dient. In dieser Lage schnappt die Rastnase 10 in die fensterförmige Aussparung 15 des Vorsprungs 3 ein, so dass der Clip 4 nur dann wieder von dem Trägerelement 1 abgenommen werden kann, wenn zuvor das Federelement 9 mit seiner Rastnase 10 aus dem Fenster 15 heraus gebogen wurde.

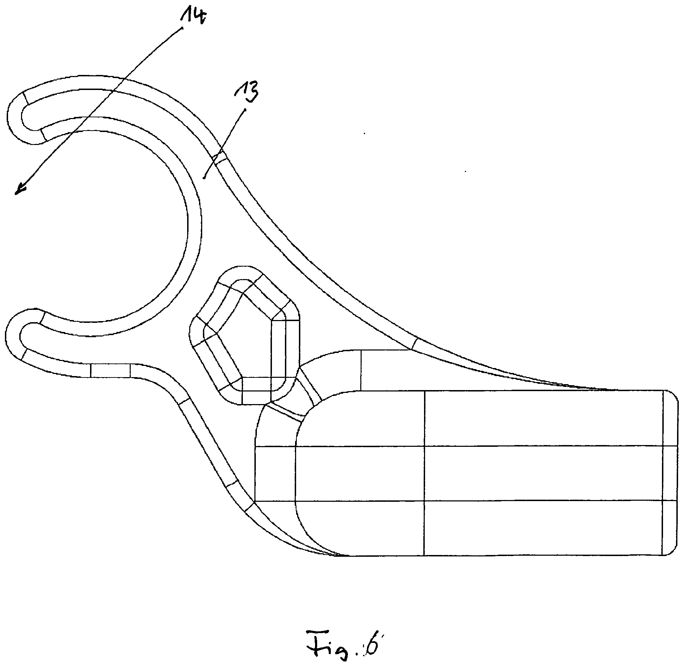

Die Aufnahmetasche 6 ist über zwei Stege 12 im Bereich der beiden Rückwände der U-förmigen Randabschnitte mit einem klauenartigen Klemmabschnitt 13 verbunden. Der klauenartige Klemmabschnitt 13 hat querschnittlich eine Kreisbogenform, die sich ein wenig über 180° erstreckt, wie insbesondere Figur 6 zeigt. Wenn ein Kunststoffröhrchen 16 seitlich gegen den klauenartigen Klemmabschnitt gedrückt wird, wird dessen Eintrittsöffnung 14 elastisch aufgeweitet, woraufhin das Kunststoffröhrchen 16 elastisch festgeklemmt wird.

## Patentansprüche

1. Glasfaser-Netzverteiler mit einem Gehäuse, in dem ein Aufnahmegerüst angeordnet ist, das mit als Befestigungsmittel für Kunststoffröhrchen dienenden Clipsen versehen ist, die jeweils einen klauenartigen Klemmabschnitt (13) haben, in den Kunststoffröhrchen seitlich eindrückbar sind, wobei das Aufnahmegerüst eine Vielzahl von nebeneinander angeordneten Trägerelementen (1) aufweist, die jeweils mehrere treppenartig versetzte Vorsprünge (3) aufweisen, die übereinander angeordnet sind und Fenster (15) aufweisen, in die Clipse (4) eingerastet sind, und wobei die Trägerelemente (1) aus Metallblech geschnitten sind und mit einem rechtwinklig abgebogenen Steg (2) versehen sind, der an einer Rückwand des Gehäuses des Glasfaser-Netzverteilers anschraubbar ist, **dadurch gekennzeichnet, dass** die Vorsprünge (3) der Trägerelemente (1) im wesentlichen eine Rechteckform haben, aus der ein im wesentlichen rechteckiges Fenster (15) ausgeschnitten ist und jeder Clip (4) eine Aufnahmetasche (6) aufweist, die auf jeweils einen Vorsprung (3) eines Trägerelements (1) aufschiebbar ist und die einen Federarm (9) mit einer Rastnase (10) aufweist, die in das Fenster einrastet, und wobei die Aufnahmetasche (6) an der Eintrittsöffnung (5) eine geradlinige Basiswand (7) hat, die an beiden seitlichen Rändern insgesamt U-förmig zurückgebogen ist, wobei im Abstand von der Eintrittsöffnung (5) der Federarm (9) aus der Basiswand (7) freigeschnitten ist, und wobei die beiden U-förmigen Randabschnitte (8) eine Rückwand (11) als Anschlag für einen Vorsprung (3) haben.

2. Glasfaser-Netzverteiler nach Anspruch 1,
**dadurch gekennzeichnet,**
**dass** die Aufnahmetasche (6) im Bereich der beiden Rückwände (11) durch Stege (12) mit dem klauenartigen Klemmabschnitt (13) verbunden ist.

3. Glasfaser-Netzverteiler nach einem der Ansprüche 1 oder 2,
**dadurch gekennzeichnet,**
**dass** der klauenartige Klemmabschnitt (13) querschnittlich eine Kreisbogenform hat, die sich über 180° hinaus erstreckt.

## Claims

1. An optical fibre network distributor with a housing, in which is arranged a receiving frame, which is provided with clips serving as fastening means for plastic tubes, which each have a claw-like clamping section (13), into which plastic tubes may be pressed in laterally, wherein the receiving frame has a plurality of support elements (1), which are arranged next to one another and which each have a plurality of projections (3) offset in the manner of steps, which are arranged above one another and have windows (15), into which clips (4) are locked, and wherein the support elements (1) are cut from metal sheet and are provided with a web (2) bent away at right angles, which may be screwed to a rear wall of the housing of the optical fibre network distributor, **characterised in that** the projections (3) of the support elements (1) have a substantially rectangular shape, cut out of which is a substantially rectangular window (15) and each clip (4) has a receiving pocket (6), which may be slid onto a respective projection (3) on a support element (1) and which has a spring arm (9) with a locking nose (10), which locks in the window, and wherein the receiving pocket (6) has a straight base wall (7) at the entry opening (5), which is bent back at both lateral edges in an overall U shape, wherein spaced from the entry opening (5) the spring arm (6) is cut out from the base wall (7) and wherein the two U-shaped edge sections (8) have a rear wall (11) constituting an abutment for a projection (3).

2. An optical fibre network distributor as claimed in Claim 1, **characterised in that** the receiving pocket (6) is connected in the vicinity of the two rear walls (11) to the claw-like clamping section (13) by webs (12).

3. An optical fibre network distributor as claimed in one of Claims 1 or 2, **characterised in that** the claw-like clamping section (13) has a circular arcuate shape in cross-section, which extends over more than 180°

## Revendications

1. Distributeur de fibres optiques avec un boîtier, dans lequel est disposée une structure de réception, qui est pourvue de clips faisant office de moyens de fixation pour des petits tubes en matière plastique, qui ont respectivement une section de serrage (13) de type griffe, dans laquelle des petits tubes de matière plastique peuvent être enfoncés de manière latérale, dans lequel la structure de réception présente une pluralité 'd'éléments de support (1) disposés les uns à côté des autres, qui présentent respectivement plusieurs parties faisant saillie (3) décalées à la manière d'un escalier, qui sont disposées les unes au-dessus des autres et présentent des fenêtres (15), dans lesquelles des clips (4) sont enclenchés, et dans lequel les éléments de support (1) sont découpés d'une tôle en métal et sont pourvus d'une entretoise (2) repliée à angle droit, qui peut être vissée au niveau d'une paroi arrière du boîtier du distributeur de fibres optiques,
**caractérisé en ce que**
les parties faisant saillie (3) des éléments de support (1) ont sensiblement une forme rectangulaire, à partir de laquelle une fenêtre (15) sensiblement rectangulaire est découpée, et chaque clip (4) présente un compartiment de réception (6), qui peut être enfilé sur respectivement une partie faisant saillie (3) d'un élément de support (1) et qui présente un bras de ressort (9) avec un ergot d'enclenchement (10), qui s'enclenche dans la fenêtre, et dans lequel le compartiment de réception (6) a, au niveau de l'ouverture d'entrée (5), une paroi de base (7) rectiligne, qui est replié vers l'arrière globalement en forme de U au niveau des deux bords latéraux, dans lequel le bras de ressort (9) est dégagé par découpage de la paroi de base (7) à distance de l'ouverture d'entrée (5), et dans lequel les deux sections de bord (8) en forme de U ont une paroi arrière (11) en tant que butée pour une partie faisant saillie (3).

2. Distributeur de fibres optiques selon la revendication 1,
**caractérisé en ce**
**que** le compartiment de réception (6) est relié à la section de serrage (13) de type pince dans la zone des deux parois arrière (11) par des entretoises (12).

3. Distributeur de fibres optiques selon l'une quelconque des revendications 1 ou 2,
**caractérisé en ce**
**que** la section de serrage (13) de type pince a dans la section transversale une forme d'arc de cercle, qui s'étend au-delà de 180°.
